(19) Europäisches Patentamt
European Patent Office
Office européen des brevets

(11) **EP 4 166 616 A1**

(12) **EUROPÄISCHE PATENTANMELDUNG**

(43) Veröffentlichungstag:
**19.04.2023 Patentblatt 2023/16**

(21) Anmeldenummer: **22194368.1**

(22) Anmeldetag: **07.09.2022**

(51) Internationale Patentklassifikation (IPC):
**C09D 11/037** (2014.01)    **C03C 17/00** (2006.01)
**C09D 11/322** (2014.01)    **C09D 11/38** (2014.01)
**H05B 6/12** (2006.01)

(52) Gemeinsame Patentklassifikation (CPC):
**C09D 11/322; C03C 3/085; C03C 3/087;
C03C 3/091; C03C 3/093; C03C 3/095;
C03C 3/097; C03C 8/02; C03C 8/04; C03C 8/16;
C03C 10/0027; C03C 17/008; C09D 11/037;
C09D 11/38; H05B 6/12;**     (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **18.10.2021 DE 102021126968**

(71) Anmelder: **SCHOTT AG**
**55122 Mainz (DE)**

(72) Erfinder:
• **SCHNEIDER, Meike**
**65232 Taunusstein (DE)**
• **DREWKE, Jochen**
**55234 Bechtolsheim (DE)**
• **MANGOLD, Stephanie**
**55288 Schornsheim (DE)**
• **MITRA, Ina**
**55271 Stadecken-Elsheim (DE)**

(74) Vertreter: **Blumbach · Zinngrebe Patentanwälte
PartG mbB
Alexandrastraße 5
65187 Wiesbaden (DE)**

(54) **KERAMISCHE DRUCKFARBE, INSBESONDERE FÜR EINEN TINTENSTRAHLDRUCK, ZUR HERSTELLUNG EINER BESCHICHTUNG AUF EINER GLASKERAMIK UND BESCHICHTETE GLASKERAMIKPLATTE**

(57) Die Erfindung betrifft allgemein eine keramische Druckfarbe, insbesondere eine solche, die für den Auftrag mittels eines Tintenstrahldruckverfahrens geeignet sind, insbesondere vorzugsweise eine keramische Druckfarbe zur Herstellung einer Beschichtung auf Glaskeramik. Ein weiterer Aspekt der Erfindung betrifft eine Glaskeramikplatte umfassend eine Beschichtung, insbesondere hergestellt oder herstellbar mittels einer solchen Druckfarbe.

Fig. 1

EP 4 166 616 A1

(52) Gemeinsame Patentklassifikation (CPC): (Forts.)
C03C 2217/452; C03C 2217/485

**Beschreibung**

Gebiet der Erfindung

Die Erfindung betrifft allgemein eine keramische Druckfarbe, insbesondere eine solche, die für den Auftrag mittels eines Tintenstrahldruckverfahrens geeignet sind, insbesondere vorzugsweise eine keramische Druckfarbe zur Herstellung einer Beschichtung auf Glaskeramik. Ein weiterer Aspekt der Erfindung betrifft eine Glaskeramikplatte umfassend eine Beschichtung, insbesondere hergestellt oder herstellbar mittels einer solchen Druckfarbe.

Hintergrund der Erfindung

Keramische Druckfarben werden für eine Vielzahl von Anwendungen eingesetzt. Auch ist es prinzipiell bekannt, solche Druckfarben auf eine Glaskeramik aufzubringen, beispielsweise auch auf eine Glaskeramikplatte mit einem niedrigen thermischen Ausdehnungskoeffizienten.

Allgemein ist es möglich, dass solche keramischen Druckfarben allgemein mittels unterschiedlicher Verfahren auftragbar sind. Üblicherweise kann beispielsweise Siebdruck verwendet werden, aber auch andere Verfahren, beispielsweise tintenstrahldruck, sind möglich.

Aus fertigungstechnischen Gründen kann es bevorzugt sein, solche keramischen Farben mittels Siebdruck aufzubringen, denn auf diese Weise können effizient große Stückzahlen von bedruckten Produkten hergestellt werden. Bei der Herstellung von bedruckten Glaskeramikplatten kann es überdies ebenfalls bevorzugt sein, die Druckfarbe nicht auf eine bereits keramisierte Glaskeramik aufzubringen. Vielmehr werden in der Regel noch nicht keramisierte Vorläuferprodukte, sogenannte "Grüngläser" bedruckt und die keramische Druckfarbe während der Keramisierung eingebrannt. Dies wird als sogenannter Primärbrand bezeichnet.

Prinzipiell ist es aber auch möglich, bereits keramisierte Glaskeramikprodukte, wie Glaskeramikplatte, zu bedrucken und die Farbe in einem sogenannten "Sekundärbrand" einzubrennen. Dies ist zwar unter fertigungstechnischen Gesichtspunkten ungünstiger, da auf diese Weise zwei Einbrände notwendig sind. Es kann jedoch vorteilhaft sein, solche Sekundärbrände vorzunehmen, beispielsweise zur Individualisierung von Produkten.

Neben den Fragen Auftragsart und des Einbrandes solcher keramischer Druckfarben stellen sich aber weitere Anforderungen an die mit diesen Druckfarben erhaltenen Beschichtungen und bedruckten Platten.

So können solche Druckfarben beispielsweise Pigmente umfassen, also als deckende oder zumindest teilweise deckende Beschichtungen ausgestaltet sein, die beispielsweise zum Anzeigen und Markieren von Funktionsbereichen verwendet werden, beispielsweise von Kochzonen oder Displaybereichen, insbesondere, wenn es sich bei dem entsprechenden Produkt um eine Glaskeramikplatte handelt, welche beispielsweise als Kochplatte zum Einsatz kommen soll.

Da solche Beschichtungen im täglichen Gebrauch teilweise erheblichen Belastungen ausgesetzt sein können, beispielsweise thermischen Spannungen oder abrasiven Belastungen, ist weiterhin eine ausreichende Haftfestigkeit der resultierenden Beschichtung erforderlich.

Weiterhin ist bekannt, dass solche Druckfarben bzw. die mittels diesen erhaltenen Beschichtungen die Festigkeit des bedruckten Substrats beeinträchtigen können.

An Druckfarben für Glaskeramikplatten werden also eine Reihe von Anforderungen gestellt. Diese müssen nicht nur für ein bestimmtes Auftragsverfahren und hohe Temperaturen geeignet sein, sondern weiterhin auch eine ausreichende Haftfestigkeit und Kratzfestigkeit der Beschichtung bzw. Beständigkeit der Beschichtung allgemein gegenüber mechanischen und/oder abrasiven Angriffen auf einem Substrat ermöglichen, dürfen dabei aber auch die mechanische Festigkeit des Substrats nicht zu stark herabsetzen.

Hierfür ist eine Reihe von Lösungen vorgeschlagen worden.

Die US-amerikanische Patentanmeldung US 2016/0244356 A1 beschreibt einen Glaskeramikartikel, welcher zumindest teilweise mit einer Emaille-Beschichtung versehen ist. Die Beschichtung umfasst nur wenig Pigment mit einem Anteil von weniger als 5 Gew.-%.

Die US-amerikanische Patentanmeldung US 2012/0263957 A1 beschreibt eine Emaillezusammensetzung, die zwischen mindestens 40 Gew.-% und höchstens 65 Gew.-% Pigment umfassen.

Die US-amerikanische Patentanmeldung US 2007/0031603 beschreibt einen digitalen Tintenstrahldrucker zur Bedruckung von Glas. Genaue Angaben zur Zusammensetzung der Drucktinte sind nicht gemacht.

Die US-amerikanische Patentanmeldung US 2020/0283333 A1 beschreibt beschichtete Glas- oder Glaskeramiksubstrate mit hoher Temperaturbeständigkeit und hoher Festigkeit sowie einem geringen thermischen Ausdehnungskoeffizienten. Die Beschichtung umfasst geschlossene Poren mit einer Größe zwischen 0,1 $\mu$m und 30 $\mu$m und einer Dicke zwischen 1.5 $\mu$m und 50 $\mu$m.

Die US-amerikanische Patentanmeldung US 2016/0340232 A1 beschreibt einen Glasfluss zur Herstellung einer opaken Beschichtung sowie ein beschichtetes Glassubstrat mit einer solchen Beschichtung. Der Glasfluss umfasst mindestens ein Pigment. Die beschriebenen glasigen Bestandteile des Glasflusses weisen einen thermischen Ausdehnungskoeffizienten von mehr als $4{,}7 \cdot 10^{-6}$/K auf.

Die internationale Patentanmeldung WO 2016/008848 A1 beschreibt eine keramische Tintenstrahldrucktinte für niedrigausdehnendes Glas und/oder niedrigausdehnende Glaskeramik.

Die US-amerikanische Patentanmeldung US 2008/0139375 A1 beschreibt eine Glaskeramikplatte mit einer schwarzen Dekorfarbe. Der Glasfluss der Dekorfarbe ist schwarz ausgebildet und die Dekorfarbe umfasst weiterhin zwischen 0 und 10 Gew.-% eines Schwarzpigments.

In der US-amerikanischen Patentanmeldung US 2007/0191206 A1 ist ein Körper aus Glas oder Glaskeramik beschrieben, welcher einer hohen thermischen Last ausgesetzt werden kann und der mit einer Farbe umfassend ein geschmolzenes Silikat sowie Effektpigmente basierend auf $SiO_2$-Plättchen dekoriert ist. Die Schrift umfasst keine Aussagen zu thermischen Ausdehnungskoeffizienten der Beschichtung. Der Schichtauftrag erfolgt mittels Siebdruck.

Auch die US-amerikanische Patentanmeldung US 2008/0214379 A1 beschreibt ein glaskeramisches oder glasiges Element, das einer hohen thermischen Last ausgesetzt werden kann und das dekoriert vorliegt. Die Dekoration erfolgt mit einer metallischen Farbe, die ein Effektpigment umfasst sowie ein geschmolzenes Silikat. Das Effektpigment basiert auf synthetischen Plättchen aus $Al_2O_3$.

Das US-amerikanische Patent US 6 525 300 B1 beschreibt eine beschichtete Glaskeramikplatte. Die Beschichtung ist eine glasbasierte Beschichtung, welche sich hinsichtlich des thermischen Ausdehnungskoeffizienten deutlich von dem der niedrigdehnenden Glaskeramik unterscheidet.

Die europäische Patentschrift EP 0 978 493 B1 beschreibt blei- und cadmiumfreie Glaszusammensetzungen, mit welchen Gläser und Glaskeramiken dekoriert werden können, sowie ein Verfahren zu Herstellung einer mit solchen Glaszusammensetzungen beschichteten Glaskeramik.

In der US-amerikanischen Patentschrift US 6 043 171 werden blei- und cadmiumfreie Glaszusammensetzungen zum Glasieren, Emaillieren und Dekorieren von Glas oder Glaskeramik beschrieben.

Die deutsche Patentschrift DE 42 01 286 C2 beschreibt die Verwendung blei- und cadmiumfreier Glaszusammensetzungen zum Glasieren, Emaillieren und Verzieren und deren Zusammensetzungen.

Die deutsche Patentschrift DE 195 12 847 C1 beschreibt blei- und cadmiumfreie Glaszusammensetzung zur Verwendung in Glasuren und Emaille. Glasuren und die Emaille sind für die Beschichtung von Gläsern geeignet. Glaskeramiken als Substratmaterial sind nicht adressiert.

Im US-amerikanischen Patent US 6 187 429 B1 sind dekorative keramische Farbschichten beschrieben, die auf Glas- oder Glaskeramiksubstrate aufgebracht sind. Zur Verbesserung der Haftfestigkeit beschreibt diese Patentschrift die Zugabe von Füllstoffen wie beispielsweise Glimmern zur keramischen Farbe.

Das US-amerikanische Patent US 5 747 395 beschreibt Glaszusammensetzungen umfassend Cobalt zur Herstellung von Beschichtungen. Die Beschichtungen selbst sind durch den Cobalt-Gehalt des Glases blau gefärbt.

Die US-amerikanische Patentanmeldung US 2021/0115281 A1 beschreibt eine mineralische Tinte für den Tintenstrahldruck.

Die US-amerikanische Patentanmeldung US 2010/0273631 A1 beschreibt einen verstärkten glaskeramischen Artikel und eine Emaille, die für die Beschichtung eines solchen Artikels geeignet ist. Die Beschichtung kann ohne Zugabe von Pigmenten zur Emaille erfolgen und ist dazu gedacht, in die Oberfläche des glaskeramischen Artikels eine Spannung einzubringen.

Die internationale Patentanmeldung WO 2016/110724 A1beschreibt eine Zusammensetzung einer Glasfritte und eine keramische Tintenstrahldrucktinte, die eine solche Glasfritte umfasst. Die Beschichtung ist insbesondere zur Beschichtung von Glas als Substratmaterial geeignet.

In der internationalen Patentanmeldung WO 2020/043929 A1 werden keramische Tinten für den digitalen Tintenstrahldruck beschrieben sowie ein Verfahren zu deren Herstellung. Die Drucktinten sind insbesondere für den Einsatz auf Glas als Substratmaterial gedacht.

Die US-amerikanische Patentanmeldung US 2009/0214840 A1 beschreibt eine Tinte zur Erzeugung eines Ätzeffekts durch die Bedruckung keramischer Oberflächen, insbesondere von Glasoberflächen.

Die internationale Patentanmeldung WO 2015/003736 A1 beschreibe eine keramische Inkjet-Tinte insbesondere für die Bedruckung von Glassubstraten.

In der US-amerikanischen Patentanmeldung US 2016/0264455 A1 ist eine Substrat beschrieben, welches mit einer glasbasierten, geräusch-optimierten Beschichtung versehen ist. Das Substrat kann aus Glas oder Glaskeramik bestehen oder diese Materialien umfassen.

Die US-amerikanische Patentanmeldung US 2013/0273320 A1 beschreibt ein beschichtetes Glas- oder Glaskeramiksubstrat mit haptischen Eigenschaften. Die haptischen Eigenschaften werden durch strukturgebende Partikel in der Beschichtung hervorgerufen.

In der US-amerikanischen Patentanmeldung US 2006/0189470 A1 ist ein blei- und cadmiumfreies Glas zur Glasur, zum Emaillieren oder zur Dekoration von Gläsern und Glaskeramiken beschrieben. Auf diese Weise ist es möglich, eine hohe Biegefestigkeit des beschichteten Substrats zu erzielen.

Das europäische Patent EP 3 372 569 B1 beschreibt eine Emaille-Zusammensetzung sowie ein Verfahren zur Herstellung emaillierter Glaskeramikartikel. Die Emaille-Zusammensetzung weist einen sehr hohen Pigmentanteil von mehr als 50 Gew.-% auf.

In der europäischen Patentschrift EP 1 870 383 B1 werden alkali- und cadmiumfreie Glasfritten und deren Verwendung zur Herstellung keramischer Farben beschrieben.

In der deutschen Patentschrift DE 10 2016216 442 B4 wird ein beschichtetes Substrat mit einem reibwertoptimierten Dekor beschrieben. Das Dekor ist glasbasiert. Weiterhin betrifft die Patentschrift ein Verfahren zur Herstellung eines solchen Dekors sowie dessen Verwendung.

In der deutschen Patentschrift DE 10 2005 040 588 B9 wird die Verwendung eines blei-und cadmiumfreien Glases sowie ein Verfahren zum Glasieren, Emaillieren und Dekorieren von sogenannten Lithium-Aluminosilikat-Glaskeramiken beschrieben.

Die deutsche Patentschrift DE 10 2004 002 766 B4 beschreibt eine Glaskeramikplatte mit wenigstens einem mattierten Bereich sowie ein Verfahren zu deren Herstellung. Zur Mattierung wird ein Glasfluss aufgebracht, welcher unpigmentiert ist.

In keiner der vorgenannten Schriften des Standes der Technik wird eine keramische Druckfarbe beschrieben, welche für einen Tintenstrahldruck geeignet ist und bei welcher die einzelnen Komponenten dahingehend aufeinander abgestimmt sind, dass die Glaspartikel der Druckfarbe und das in der Druckfarbe verwendete Pigment hinsichtlich des thermischen Ausdehnungskoeffizienten aufeinander abgestimmt sind. Auch betreffen die meisten Schriften des Standes der Technik zumeist Druckverfahren wie Siebdruck sowie den sogenannten Primärbrand zur Herstellung von glasbasierten Beschichtungen auf Glaskeramiken.

Es besteht damit ein Bedarf an keramischen Druckfarben, insbesondere für den Auftrag mittels eines Tintenstrahldruckverfahrens, insbesondere vorzugsweise zur Herstellung einer Beschichtung auf einer Glaskeramik, welche flexible einsetzbar ist, insbesondere auch mittels eines Sekundärbrandes eingebrannt werden kann, die eine ausreichende Festigkeit eines beschichteten Glaskeramikartikels gewährleistet und weiterhin auch ausreichend haftfest und beständig gegenüber mechanischen Belastungen ist.

Aufgabe der Erfindung

Die Aufgabe der Erfindung besteht in der Bereitstellung einer keramischen Druckfarbe, welche die vorstehend skizzierten Probleme des Standes der Technik zumindest teilweise überwindet oder mindert.

Zusammenfassung der Erfindung

Die Aufgabe wird gelöst durch den Gegenstand der unabhängigen Ansprüche. Bevorzugte und spezielle Ausführungsformen finden sich in den abhängigen Ansprüchen, der Beschreibung und den Zeichnungen nach der vorliegenden Offenbarung.

Demnach betrifft die vorliegende Offenbarung eine keramische Druckfarbe, insbesondere für den Auftrag mittels eines Tintenstrahldruckverfahrens, insbesondere vorzugsweise zur Herstellung einer Beschichtung auf einer Glaskeramik. Die Druckfarbe umfasst wenigstens ein glasiges Material umfassend Glaspartikel und wenigstens ein Pigment umfassend Pigmentpartikel. Dabei liegt das Verhältnis der Summe des Gewichts der von der Druckfarbe umfassten Glaspartikel zu der Summe der von der Druckfarbe umfassten Pigmentpartikel zwischen mindestens 1,5 und weniger als 19.

Allgemein wird im Rahmen der vorliegenden Offenbarung unter einer Druckfarbe, die für den Auftrag mittels eines Tintenstrahldruckverfahrens eine solche Druckfarbe verstanden, die mit gängigen Tintenstrahldruckern für insbesondere keramische Druckfarben verdruckbar ist. Insbesondere wird hierunter im Rahmen der vorliegenden Offenbarung verstanden eine Druckfarbe, insbesondere eine keramische Druckfarbe, welche Eigenschaften in den folgenden Parameterbereichen aufweist:

| Parameter | Minimum | Maximum |
|---|---|---|
| Z-Zahl | 1,5 | 4,2 |
| Weber-Zahl | 12 | 48 |
| Viskositätsindex | 0,98 | 1,05 |
| Oberflächenspannung | 20 mN/m | 40 mN/m |

Hierbei ist zu beachten, dass bei Tintenstrahldruckverfahren verschiedene Parameter und Eigenschaften des zu verdruckenden Mediums zu berücksichtigen sind. Daher werden beispielsweise Eigenschaften des Druckmediums wie Viskosität, Oberflächenspannung und Dichte nicht einzeln für sich, sondern in ihrem Zusammenwirken betrachtet. Beispielsweise kann hierfür die sogenannte Z-Zahl, bei der es sich um die inverse Ohnesorge-Zahl handelt, herangezogen werden.

Diese ist wie folgt definiert:

$$Z = \frac{\sqrt{\rho \sigma d}}{\eta}$$

Die Weber-Zahl (kurz We) ist folgendermaßen definiert

$$We = \frac{\rho v^2 d}{\sigma}$$

Hierbei steht $\eta$ für die Viskosität in Pas bei einer Scherrate von größer oder gleich 1000/s, $\sigma$ für die Oberflächenspannung in N/m, $\rho$ für die Dichte in kg/m$^3$, d für die charakteristische Länge (den Düsendurchmesser) in m, und v für die Tropfengeschwindigkeit in m/s.

Z und We sind über die Reynolds-Zahl miteinander verbunden. Beim Viskositätsindex handelt es sich um ein Maß dafür, wie sehr es sich um eine Newton'sche Flüssigkeit handelt und ob es wahrscheinlich ist, dass sich beim Drucken die Viskosität verändern wird. Hierzu wird eine Viskositätskurve bei der Drucktemperatur (die in der Regel zwischen 10°C und 40°C liegt, vorzugsweise bei etwa 25°C) bestimmt.

Die Glaspartikel weisen einen Äquivalentdurchmesser $d_{90}$ auf, welcher im Bereich von mindestens 0,5 $\mu$m bis höchstens 5 $\mu$m liegt, bevorzugt einen Äquivalentdurchmesser $d_{97}$ im Bereich von mindestens 0,5 $\mu$m bis höchstens 5 $\mu$m, besonders bevorzugt einen Äquivalentdurchmesser $d_{97}$ im Bereich von mindestens 0,5 $\mu$m bis höchstens 2,5 $\mu$m.

Der resultierende effektive lineare thermische Ausdehnungskoeffizient, $\alpha_{20\text{-}300,\,eff}$, bezogen auf die von der Druckfarbe umfassten Glaspartikel und Pigmentpartikel, liegt im Bereich von 6,5 * 10$^{-6}$/K bis 11 * 10$^{-6}$/K liegt.

Eine bevorzugte Obergrenze für den resultierenden effektiven linearen thermischen Ausdehnungskoeffizienten, $\alpha_{20\text{-}300,\,eff}$, liegt bei 10 * 10$^{-6}$/K, besonders bevorzugt bis weniger als 9,5 * 10$^{-6}$/K und ganz besonders bevorzugt bei höchstens 9 * 10$^{-6}$/K oder sogar weniger als 9 * 10$^{-6}$/K.

Vorzugsweise ergibt sich der effektive lineare thermische Ausdehnungskoeffizient $\alpha_{20\text{-}300,\,eff}$ nach der folgenden Formel:

$$\alpha_{20\text{-}300,\,eff} = \sum \left(\text{Gewichtsanteil glasiges Material i} * \alpha_{20\text{-}300,\text{glasiges Material i}}\right) + \sum$$

$$\left(\text{Gewichtsanteil Pigment z} * \alpha_{20\text{-}300,\text{Pigment z}}\right).$$

Der Gewichtsanteil ist jeweils bezogen ist auf das Gesamtgewicht der Druckfarbe an Feststoffen (also auf den Feststoffanteil der Druckfarbe), also umfassend alle glasigen Materialien und Pigmente.

Gemäß einer Ausführungsform ist die keramische Druckfarbe bleifrei ausgebildet. Dies bedeutet, dass bis auf technische bedingte Verunreinigungen die keramische Druckfarbe - und in entsprechender Weise die Beschichtung auf der Glaskeramikplatte - die Komponente PbO höchstens in einem Gehalt von 500 ppm, bezogen auf das Gewicht, umfasst, vorzugsweise bis zu einem Gehalt von höchstens 200 ppm, bezogen auf das Gewicht.

Gemäß einer weiteren Ausführung umfasst die Druckfarbe kein Blähmittel. Unter einem Blähmittel werden im Rahmen der vorliegenden Offenbarung Mittel verstanden, welche sich bei Temperaturerhöhung unter Bildung einer fluiden Phase zersetzen, beispielsweise Mittel, welche Gas abspalten Solche Blähmittel können auch als Schäumungsmittel bezeichnet werden. Die keramische Druckfarbe nach der vorliegenden Offenbarung umfasst, wie ausgeführt, vorzugsweise kein solches Blähmittel.

Eine solche Ausgestaltung einer Druckfarbe ist sehr vorteilhaft.

Die Druckfarbe ist vorliegend keramisch ausgebildet. Unter einer keramischen Farbe wird im Rahmen der vorliegenden Anmeldung eine Farbe verstanden, welche anorganisch aufgebaut ist, also im eingebrannten zu mindestens 95 Gew.-% anorganische Bestandteile umfasst. Insbesondere kann eine solche keramische Farbe glasbasiert ausgebildet sein, beispielsweise als sogenannte Emaillefarbe.

Durch die Ausbildung der Farbe der vorliegenden Offenbarung als Druckfarbe ist es möglich, die Druckfarbe lateral strukturiert aufzubringen, also beispielsweise in Form eines Musters. Insbesondere ist es damit möglich, Markierungen auf ein Substrat aufzubringen.

Die Druckfarbe ist vorliegend bevorzugt für den Tintenstrahldruck ausgebildet. Auch dies ist vorteilhaft, weil auf diese Weise keine Druckschablonen, wie beispielsweise ein Sieb für den sogenannten Siebdruck, hergestellt werden müssen. Vielmehr kann das vorgegebene Druckbild digital vorgegeben werden, sodass ein solches Verfahren besonders günstig ist für die Herstellung kleiner Stückzahlen bzw. zur Individualisierung von Produkten.

Die Druckfarbe nach der vorliegenden Offenbarung umfasst wenigstens ein glasiges Material. Unter einem glasigen Material wird im Rahmen der vorliegenden Offenbarung ein amorphes, anorganisches, nichtmetallisches Material verstanden, welches durch einen Schmelzprozess erhalten wurde oder erhalten werden kann. Das glasige Material umfasst Glaspartikel, liegt also vorzugsweise in Pulverform vor. Weiterhin umfasst die Druckfarbe wenigstens ein Pigment, welches Pigmentpartikel umfasst. Unter einem Pigment wird im Rahmen der vorliegenden Offenbarung ein Farbkörper, insbesondere ein keramischer Farbkörper, verstanden. Keramische Farbkörper sind im Rahmen der vorliegenden Offenbarung solche Pigmente, welche anorganisch ausgebildet sind, vorzugsweise anorganisch und nichtmetallisch. Beispielsweise geeignet als Pigment im Rahmen der vorliegenden Anmeldung sind Spinellpigmente, aber auch $TiO_2$ oder $Fe_2O_3$. Solche keramischen Farbkörper können nicht nur den Einbrandbedingungen standhalten, wie sie beim Einbrand einer keramischen Farbe auftreten, sondern können auch im Gebrauch eines solcherart beschichteten Produkts, beispielsweise einer Glaskeramik, betrieblich hohen Temperaturen ausgesetzt werden, ohne dass es zu einem Zersetzen des Pigments kommt. Das Pigment umfasst Pigmentpartikel, liegt also vorzugsweise ebenfalls in Pulverform vor.

Es ist weiterhin möglich und kann auch bevorzugt sein, dass die keramische Druckfarbe mehr als ein glasiges Material umfasst und mehr als ein Pigment.

Gemäß der vorliegenden Offenbarung ist es weiterhin vorgesehen, dass das Verhältnis der Summe des Gewichts der von der Druckfarbe umfassten Glaspartikel zu der Summe der von der Druckfarbe umfassten Pigmentpartikel zwischen mindestens 1,5 und weniger als 19 liegt. Dies entspricht einem Anteil der Glaspartikel von wenigstens mehr als 60 Gew.-% und höchstens 95 Gew.-%, bezogen auf das Gewicht der von der Druckfarbe umfassten Glaspartikel und Pigmentpartikel. Vorzugsweise kann dieser Anteil der Glaspartikel zwischen mindestens 80 Gew.-% und höchstens 90 Gew.-% liegen.

Dies ist sehr vorteilhaft, denn auf diese Weise wird eine ausreichende mechanische Beständigkeit einer resultierenden Beschichtung auf einem Substrat, beispielsweise einer Glaskeramikplatte, erzielt. Denn das glasige Material bzw. ggf. die mehreren glasigen Materialien wirken als Bindemittel und sorgen für eine ausreichende Verbindung zwischen dem Substrat und den Pigmentpartikeln. Nachteilig an einem solchen hohen Anteil des glasigen Materials oder der glasigen Materialien ist allerdings, dass auf diese Weise die Festigkeit des beschichteten Substrats in Mitleidenschaft gezogen werden kann. Daher sollte der Anteil des glasigen Bestandteils bzw. ggf. der glasigen Bestandteile nicht zu hoch sein und ist vorzugsweise begrenzt auf höchstens 95 Gew.-%, bevorzugt auf höchstens 90 Gew.-%, bezogen auf die Summe des Gewichts des glasigen Materials bzw. der glasigen Materialien und des Pigments bzw. der Pigmente. Auf diese Weise wird auch eine noch ausreichende Opazität bzw. Sichtbarkeit der Beschichtung gewährleistet, was aus Sicherheitsgründen relevant sein kann, beispielsweise für den Fall, das mit der keramischen Druckfarbe nach der vorliegenden Offenbarung eine Kennzeichnung technischer Bereiche, wie Bedienbereichen o.ä., beabsichtigt ist. Dies kann beispielsweise gerade dann relevant sein, wenn mit der Druckfarbe eine Glaskeramikplatte für die Verwendung als Kochfläche bzw. Kochplatte beschichtete werden soll.

Erfindungsgemäße Glaskeramikplatten können in einer Vielzahl von Anwendungen verwendet werden.

In einer Ausführungsform kann eine Glaskeramikplatte in einem Kochgerät als Kochplatte verwendet werden.

In einer weiteren Ausführungsform kann eine Glaskeramikplatte zur Abdeckung einer Benutzerschnittstelle in einem Bedienfeld für die Steuerung wenigstens eines Haushaltsgeräts, insbesondere eines Kochgeräts, eines Backofens, eines Kühlschranks oder einer Dunstabzugshabe verwendet werden.

In einer Weiterentwicklung dieser Ausführungsform kann das Bedienfeld für die Steuerung mehrerer Haushaltsgeräte, beispielsweise für ein Kochgerät, einen Backofen und eine Dunstabzugshaube, ausgelegt sein. Eine Dunstabzugshaube kann auch in Form einer sogenannten Downdraft-Abzugshaube in ein Kochgerät mit einer entsprechenden Kochplatte aus Glaskeramik integriert sein. Hierfür kann dann die Glaskeramikplatte eine Aussparung aufweisen, in die die Downdraft-Abzugshaube eingesetzt werden kann.

In einer weiteren Ausführungsform kann die Glaskeramikplatte als Abdeckung einer Dunstabzugshaube, insbesondere einer Downdraft-Dunstabzugshaube, ausgeführt sein. Insbesondere in modularen Kochsystemen können Downdraft-Abzugshauben als separates Modul ohne Kochfunktion ausgeführt sein. Da solche Module aber dafür geeignet sein müssen, in Kombination mit Modulen mit Kochfunktion eingesetzt zu werden, müssen sie ebenfalls die für Glaskeramiken üblichen, sehr hohen Anforderungen an die thermische und chemische Beständigkeit aufweisen. Darüber hinaus können solche Module auch eine Benutzerschnittstelle zur Steuerung des Downdraft-Abzugs aufweisen.

In einer weiteren Ausführungsform kann die Glaskeramikplatte als Verblendung einer Dunstabzugshaube ausgeführt sein. In dieser Ausführungsform kann es ästhetisch besonders ansprechend sein, wenn das Kochfeld des Kochgerätes und die Verblendung der Dunstabzugshaube die gleiche Glaskeramikplatte aufweisen. Diese Ausführungsform ist besonders vorteilhaft, wenn die Dunstabzugshaube eine hinter der Glaskeramikplatte angeordnete Benutzerschnittstelle zur Steuerung der Dunstabzugshaube oder eine Benutzerschnittstelle zur kombinierten Steuerung der Dunstabzugshaube und des Kochgeräts aufweisen.

In Backöfen, insbesondere Pyrolysebacköfen, kann die Glaskeramikplatte als Teil einer Türverglasung verwendet werden.

In einer weiteren Ausführungsform kann eine Glaskeramikplatte in einem Küchenmöbel, insbesondere einem Küchenschrank, einer Einbauküche oder einem Kochtisch als Arbeitsplatte verwendet werden.

In einer weiteren Ausführungsform kann eine Glaskeramikplatte als Spritzschutzplatte für Küchen verwendet werden. So kann es beispielsweise in Form einer Platte als Rückwand einer Küche, beispielsweise anstelle eines Fliesenspiegels, verwendet werden. Ebenso kann sie als freistehende Spritzschutzplatte an einer Kochinsel vorgesehen sein. Eine solche Spritzschutzplatte kann entweder fest montiert sein, oder versenkbar ausgeführt sein. Versenkbare Spritzschutzplatten können für den Betrieb eines Kochgerätes ausgefahren werden, um als Spritzschutz zu fungieren. Nach Beenden des Kochvorgangs können sie dann beispielsweise im Kochgerät oder in der Arbeitsplatte versenkt werden. Hierbei kann es ästhetisch besonders ansprechend sein, wenn sowohl die Kochplatte des Kochgerätes als auch die Spritzschutzplatte eine erfindungsgemäße Glaskeramikplatte aufweisen. Zusätzlich kann die Arbeitsplatte der Küche ebenfalls die gleiche Glaskeramikplatte enthalten.

Spritzschutzplatten für Küchen werden regelmäßig während dem Kochen mit heißen Flüssigkeiten wie Salzwasser oder pflanzlichen oder tierischen Fetten bespritzt. Außerdem werden sie regelmäßig mit chemischen Reinigungsmittel gesäubert. Da erfindungsgemäße Glaskeramikplatten thermisch und chemisch sehr stabil sind, sind sie besonders gut für die Verwendung als Spritzschutzplatte für Küchen geeignet.

In einer weiteren Ausführungsform kann eine Glaskeramikplatte in einem Laborgerät, insbesondere einer Heizplatte, einem Ofen, einer Waage oder einem Labormöbel, insbesondere einem Abzug, einem Schrank oder einem Tisch zur Abdeckung einer Benutzerschnittstelle oder als Arbeitsplatte verwendet werden.

In einer weiteren Ausführungsform kann eine Glaskeramikplatte als Kaminsichtscheibe, als Sichtscheiben für Verbrennungs- und andere Hochtemperaturprozesskammern, als Brandschutzverglasung, als Teil eines Gehäuses für mobile elektronische Geräte, insbesondere Mobiltelefone und Tablet-Computer, als Abdeckung für IR-Heizstrahler oder Gasbrenner, insbesondere in Gas-Grills, als Sichtblende oder als Abdeckung für Induktionsladestationen, beispielsweise für Kraftfahrzeuge in Automobilen, beispielsweise im Armaturenbereich oder der Mittelkonsole verwendet werden.

Dabei kann die Glaskeramikplatte aufgrund ihrer thermischen und chemischen Beständigkeit in Kaminen sowohl für Innenräume, als auch für den Außenbereich verwendet werden. Derartige Kamine können beispielsweise mit Gas, Holz oder Pellets befeuert werden.

Bei Hochtemperaturprozesskammern kann es sich beispielsweise um Vakuumbeschichtungsanlagen handeln.

Die Glaspartikel weisen einen Äquivalentdurchmesser $d_{90}$ auf, welcher im Bereich von mindestens $0,5 \mu m$ bis höchstens $5 \mu m$ liegt, bevorzugt einen Äquivalentdurchmesser $d_{97}$ im Bereich von mindestens $0,5 \mu m$ bis höchstens $5 \mu m$, besonders bevorzugt einen Äquivalentdurchmesser $d_{97}$ im Bereich von mindestens $0,5 \mu m$ bis höchstens $2,5 \mu m$. Dies ist vorteilhaft, weil auf diese Weise sehr feine Partikel vorliegen, welche sich auch in einem Tintenstrahldruckverfahren gut verdrucken lassen, ohne dass die Druckköpfe verstopfen. Unter dem Äquivalentdurchmesser wird vorliegend der auf das Volumen eines Partikels bezogene Durchmesser einer Kugel des gleichen Volumens wie des betrachteten Partikels verstanden. Es handelt sich hier also um den sogenannten volumenäquivalenten Kugeldurchmesser.

Eine solche Ausgestaltung mit den entsprechenden Äquivalentdurchmessern ist sehr vorteilhaft. Denn auf diese Weise ist es einfach möglich, eine dichte Schicht zu erzielen, insbesondere, wenn entsprechend der Äquivalentdurchmesser der verwendeten und von der keramischen Druckfarbe umfassten Pigmentpartikel berücksichtigt wird. So kann auch eine sehr glatte Schicht erhalten werden, die ein einfacheres Abreinigen der Beschichtung ermöglicht. Dies ist besonders von Bedeutung, wenn es sich um eine Beschichtung handelt, welche sich auf einer Glaskeramikplatte, die als Kochfläche oder Kochplatte verwendet werden soll, handelt. Weiterhin senken kleinere Partikel auch die Einbrandgröße bzw. die Einbrandzeit, da auf diese Weise ein homogeneres Schmelzen der Partikel erfolgt.

Der resultierende effektive lineare thermische Ausdehnungskoeffizient, $\alpha_{20\text{-}300,\, eff}$, bezogen auf die von der Druckfarbe umfassten Glaspartikel und Pigmentpartikel, liegt im Bereich von $6,5 * 10^{-6}/K$ bis $11 * 10^{-6}/K$. Auf diese Weise kann noch immer eine ausreichende Festigkeit des mit einer solchen Druckfarbe beschichteten Substrats, auch eines Glaskeramiksubstrats, sichergestellt werden.

Gleichzeitig ist es auf diese Weise möglich, glasige Materialien, beispielsweise Glasflüsse, zu verwenden, die auch unter den Bedingungen eines Sekundärbrandes eingesetzt werden können.

Der effektive lineare thermische Ausdehnungskoeffizient $\alpha_{20\text{-}300,\, eff}$ ergibt sich vorzugsweise nach der folgenden Formel:

$$\alpha_{20\text{-}300,\ eff} = \sum \left(\text{Gewichtsanteil glasiges Material i} * \alpha_{20\text{-}300,\text{glasiges Material i}}\right) + \sum$$

$$\left(\text{Gewichtsanteil Pigment z} * \alpha_{20\text{-}300,\text{Pigment z}}\right)$$

Mit anderen Worten bedeutet dies, dass jeweils der Gewichtsanteil eines glasigen Materials bzw. Pigments am Gesamtgewicht, welche sich aus der Summe der Gewichte des glasigen Materials oder der glasigen Materialien und des Pigments oder der Pigmente zu multiplizieren ist mit dem entsprechenden linearen thermischen Ausdehnungskoeffizienten, wobei nach dieser bevorzugten Ausführungsform sich der effektive (oder resultierende) lineare thermische Ausdehnungskoeffizient der Druckfarbe dann ergibt als die Summe dieser Produkte.

Mit dieser Ausführung wird nun eine keramische Druckfarbe bereitgestellt, welche es ermöglicht, den linearen thermischen Ausdehnungskoeffizienten, welcher aus den Feststoffbestandteilen der Druckfarbe, also dem glasigen Material oder den glasigen Materialien oder dem Pigment oder Pigmenten gebildet wird bzw. diese umfasst. Eine Anpassung des resultierenden bzw. effektiven linearen thermischen Ausdehnungskoeffizienten der Druckfarbe ist also bei der Farbentwicklung bereits einfach möglich. So ist es beispielsweise auf diese Weise möglich, bei gegebenem Pigment, beispielsweise zur Erzielung einer bestimmten Farbe oder einer bestimmten vorteilhaften sonstigen Eigenschaft, beispielsweise von besonderer Schichthärte o.ä., das glasige Material gezielt auszuwählen und/oder die Verhältnisse der einzelnen Materialien zueinander, die den effektiven linearen thermischen Ausdehnungskoeffizienten der Druckfarbe beeinflussen, aufeinander abzustimmen und anzupassen.

Unter dem glasigen Bestandteil der Druckfarbe wird hierbei insbesondere auch verstanden, dass das glasige Material als Glasfluss oder Glasfritte ausgebildet sein kann oder ausgebildet ist. Es ist möglich, dass das glasige Material der Druckfarbe als Glasfritte oder Glasfluss zugesetzt wird. Gegebenenfalls kann es aber auch möglich sein, die einzelnen Bestandteile des glasigen Materials als Komponenten oder in Form von Vorläuferprodukten zuzugeben, sodass sich das glasige Material erst während des Einbrandes selbst bildet.

Gemäß einer Ausführungsform umfassen die Glaspartikel ein Glas mit einem linearen thermischen Ausdehnungskoeffizienten $\alpha_{20\text{-}300}$ von wenigstens $5 * 10^{-6}$/K und maximal $11 * 10^{-6}$/K. Dies ist vorteilhaft, weil auf diese Weise eine Druckfarbe resultiert, mit welcher gut haftende Schichten beispielsweise auf einem Glaskeramiksubstrat erzielt werden können. Andererseits handelt es sich dabei auch um glasige Materialien, welche in der Regel auch mittels einem sogenannten Sekundärbrand eingebrannt werden können, also um solche, welche auch bei geringeren Einbrandtemperaturen bereits aufschmelzen.

Gemäß einer Ausführungsform ist daher vorgesehen, dass die Druckfarbe bei einer Temperatur von 830°C oder weniger, bevorzugt 750°C oder weniger, und vorzugsweise mindestens 500°C einbrennbar ist.

Eine zu hohe Einbrandtemperatur ist aus wirtschaftlichen Gründen ungünstig, aber auch unter fertigungstechnischen Gesichtspunkten ungünstig, denn bei zu hohen Temperaturen beim Einbrand könnte ein glaskeramisches Produkt beispielsweise weiter keramisieren oder sich verformen, sodass Produktspezifikationen möglicherweise nicht mehr erfüllt wären. Die Einbrandtemperatur sollte daher also nicht zu hoch sein und beträgt vorzugsweise 830°C oder weniger, vorzugsweise 750°C oder weniger. Auf der anderen Seite ist eine Mindesttemperatur für das Einbrennen von wenigstens 500°C bevorzugt. Denn auf diese Weise ist sichergestellt, dass es zu einem guten Haftverbund zwischen dem glasigen Material und dem Substrat einerseits und vorzugsweise auch zwischen den einzelnen Bestandteilen der keramischen Druckfarbe selbst kommt.

Gemäß einer weiteren Ausführungsform weisen die von der Druckfarbe umfassten Pigmentpartikel einen Äquivalentdurchmesser $d_{90}$ von mindestens 0,5 $\mu$m bis höchstens 5 $\mu$m auf. Es ist vorteilhaft, wenn die verwendeten Pigmentpartikel nicht zu groß sind, denn zu große Pigmentpartikel können nicht gut verdruckt werden und könnten insbesondere im Tintenstrahldruck zur Verstopfung von Düsen führen. Allerdings sollten die Partikel auch nicht zu klein sein, um eine ausreichende Deckkraft und Farbstärke zu gewährleisten. Daher ist es vorteilhaft, wenn der $d_{90}$ der Pigmentpartikel, bezogen auf den Äquivalentdurchmesser, höchstens 5 $\mu$m beträgt, aber mindestens 0,5 $\mu$m.

Gemäß einer nochmals weiteren Ausführungsform weisen die Glaspartikel einen Erweichungspunkt von 500°C bis 800°C auf. Bevorzugt liegt der Erweichungspunkt der Glaspartikel zwischen 500°C und 700°C. Auf diese Weise kann auch bei relativ niedrigen Temperaturen, also in einem Sekundärbrand, bereits eine ausreichende Umhüllung der Pigmentpartikel sichergestellt werden.

Gemäß einer nochmals weiteren Ausführungsform umfassen die Glaspartikel ein Glas umfassend wenigstens 15 Gew.-% $SiO_2$ und höchstens 72 Gew.-% $SiO_2$ oder bestehen aus einem solchen Glas. $SiO_2$ ist eine bekannte glasbildende Komponente, welche einem Glas auch eine ausreichende chemische Beständigkeit verleihen kann. Daher sollte der Gehalt des Glases an $SiO_2$ bei mindestens 15 Gew.-% liegen. Da $SiO_2$ aber auch die Schmelzviskosität und die Schmelztemperatur erhöht, sollte der Gehalt des glasigen Materials an $SiO_2$ nicht zu hoch sein und beträgt daher vorzugsweise höchstens 72 Gew.-%.

Gemäß einer weiteren Ausführungsform umfassen die Glaspartikel ein Glas umfassend $Na_2O$ oder bestehen aus einem solchen Glas, wobei der Anteil von $Na_2O$ bevorzugt mindestens 0,5 Gew.-% beträgt und besonders bevorzugt

höchstens 11 Gew.-%. Na$_2$O ist eine bekannte Glaskomponente, welche als Netzwerkwandler wirkt sowie die Schmelztemperatur senkt. Daher können die Glaspartikel bzw. das glasige Material ein Glas umfassen oder aus einem solchen bestehen, welches Na$_2$O als Komponente umfasst. Vorteilhaft kann es sein, wenn der Gehalt des Glases an Na$_2$O wenigstens 0,5 Gew.-% beträgt. Jedoch sollte der Gehalt des Glases an Na$_2$O nicht zu hoch sein, denn dadurch kann die chemische Beständigkeit herabgesetzt werden. Auch kommt es auf diese Weise zu einer Erhöhung des thermischen Ausdehnungskoeffizienten. Es hat sich daher insgesamt als vorteilhaft erwiesen, wenn der Gehalt des Glases der Glaspartikel bzw. des glasigen Materials nicht zu hoch isr. Vorzugsweise beträgt er nicht mehr als 11 Gew.-%.

Ein weiterer Aspekt der vorliegenden Offenbarung betrifft eine Glaskeramikplatte umfassend eine Beschichtung. Vorzugsweise handelt es sich bei der Beschichtung um eine solche, die aus einer Druckfarbe nach einer Ausführungsform hergestellt oder zumindest herstellbar ist. Die Beschichtung umfasst wenigstens eine glasige Farbe sowie Pigmentpartikel, wobei der Gewichtsanteil der Pigmentpartikel an der Beschichtung zwischen mindestens 5 Gew.-% und weniger als 40 Gew.-% beträgt. Die Pigmentpartikel liegen in der glasigen Phase dispergiert vor.

Der effektive lineare thermische Ausdehnungskoeffizient $\alpha_{20-300, \text{eff}}$ ergibt sich vorzugsweise nach der folgenden Formel:

$$\alpha_{20-300, \text{eff}} = \sum \left(\text{Gewichtsanteil glasiges Material i} * \alpha_{20-300, \text{glasiges Material i}}\right) + \sum$$

$$\left(\text{Gewichtsanteil Pigment z} * \alpha_{20-300, \text{Pigment z}}\right).$$

Bevorzugt weist die Beschichtung weniger als 5 Vol.-% Porosität auf, besonders bevorzugt weniger als 1 Vol.-%, ganz besonders bevorzugt weniger als 0,5 Vol.-% und am meisten bevorzugt weniger als 0,1 Vol.-%, Mit anderen Worten weist die Beschichtung vorzugsweise eine geringe Porosität auf. Insbesondere kann es auch sehr vorteilhaft sein, wenn nicht nur das Porenvolumen in der Beschichtung, wie vorstehend ausgeführt, gering ist, sondern auch die Poren nur einen geringen Äquivalentdurchmesser aufweisen, insbesondere einem Äquivalentdurchmesser von höchstens 200 nm, vorzugsweise mit einem Äquivalentdurchmesser von weniger als 100 nm. Mit einer solchen Beschichtung mit nur geringer Porosität und mit vorzugsweise nur kleinen, insbesondere geschlossene Poren können insbesondere dichte, kratz- und haftfeste Beschichtungen erhalten werden. Auch weisen solche Beschichtungen üblicherweise eine hohe Abriebfestigkeit und eine gute chemische Beständigkeit auf, insbesondere verglichen mit Beschichtungen, welche offene Poren an der Oberfläche aufweisen. Denn gerade in offenen Poren können sich Verunreinigungen und Partikel festsetzen und dann nicht nur störend beim Reinigen sein, sondern ggf. auch zu einer weiteren Degradation der Beschichtung beitragen. Dies wird bei der Glaskeramikplatte nach Ausführungsformen vorteilhaft durch eine geringe Porosität, vorzugsweise eine rein geschlossene Porosität, vermieden. Unter dicht wird hierbei nicht nur die Massendichte (üblicherweise angegeben in g/cm$^3$) verstanden, sondern auch die Eigenschaft der Beschichtung, als Barriere gegenüber dem Durchtritt von Fluiden wirken zu können. Je weniger Poren und insbesondere je weniger offene Poren die Beschichtung aufweist, desto besser ist auch die Dichtigkeit der Beschichtung gegenüber dem Durchtritt von Fluiden wie beispielsweise Wasser oder Wasserdampf.

Die Porenbildung in Beschichtungen kann vorteilhaft durch Auswertung von Rasterelektronenmikrosskopbildern erfolgen. Vorteilhaft wird hier die Vergrößerung so gewählt, dass ein Ausschnitt von 10 μm sichtbar gemacht wird. Auf solchen Aufnahmen können auch sehr kleine Poren noch hinreichend gut sichtbar gemacht werden. Die Auswertung der Porosität kann dann über eine statistische Betrachtung von porenfreien und Poren umfassenden Teilen des rasterelektronenmikroskopischen Bildes erfolgen. Vorzugsweise umfasst die Beschichtung auf einem solchen Ausschnitt, welcher einer 10.000x Vergrößerung entspricht, höchstens eine Pore auf einer Fläche von 10 μm * 10 mm.

Allgemein weist die Beschichtung einen resultierenden effektiven linearen thermischen Ausdehnungskoeffizienten, $\alpha_{20-300, \text{eff}}$, im Bereich von $6,5 * 10^{-6}/K$ bis $11 * 10^{-6}/K$ auf. Dies ist, gerade auch in einer Kombination mit einer Ausführung der Beschichtung mit nur sehr geringer Porosität, vorteilhaft, weil auf diese Weise eine dichte, kraftfeste Beschichtung auf einer Glaskeramikplatte realisiert werden kann, ohne dass es zu einer kritischen Beeinträchtigung der Festigkeit der beschichteten Glaskeramikplatte kommt.

Unter Poren werden im Rahmen der vorliegenden Anmeldung Hohlräume in der Beschichtung verstanden, wobei die Hohlräume bzw. offen oder auch geschlossen sein können. Poren können allgemein in Beschichtung, insbesondere in glasbasierten oder in partikulären Beschichtung, also beispielsweise in pigmentierten Beschichtungen, entstehen, indem sie gezielt erzeugt werden, beispielsweise durch ein sogenanntes Blähmittel, welches sich beim Einbrand zersetzt und ein Gas bildet, welches in der Beschichtung dann einen Hohlraum erzeugt. Es ist aber auch möglich, dass Poren nicht absichtlich erzeugt werden, sondern resultieren aus Blasen, welche in einem flüssigen Beschichtungsmittel vorhanden waren oder sich beim Aufbringen eines solchen Beschichtungsmittels im auf dem Substrat nach der Beschichtung entstandenen Beschichtungsfilm gebildet haben. Auch können solche Poren resultieren aus Hohlräumen zwischen partikulären Bestandteilen, beispielsweise durch ein unvollständiges Aufschmelzen von Partikeln oder durch eine unvollständige Umhüllung von Pigmenten bzw. Pigmentpartikeln.

Vorteilhaft kann es daher insbesondere sein, wenn das glasige Material oder die glasigen Materialien der Druckfarbe, aus welchen sich bei Einbrand eines mittels der Druckfarbe erzeugten Beschichtungsfilms auf dem Substrat die Beschichtung bildet, so ausgebildet ist, dass es ein möglichst vollständiges Aufschmelzen bei der genannten Einbrandtemperatur gewährleistet. Dafür kann es weiterhin auch besonders hilfreich sein, wenn die Glaspartikel des glasigen Materials eine relativ geringe Korngröße aufweisen, vorzugsweise in den Grenzen, welche für die Druckfarbe nach Ausführungsformen genannt ist. Auch kann es bevorzugt sein, wenn die Korngrößenverteilung recht eng ist, also vorzugsweise nur eine geringe Abweichung der Korngröße um den Mittelwert herum vorliegt Denn auf diese Weise kann ein homogenes Schmelzverhalten sichergestellt werden. Größere, unvollständig aufschmelzende Partikel können so weitgehend vermieden oder zumindest minimiert werden, was sich positiv auf die Porosität auswirkt - also insbesondere dazu führt, dass wenige und wenn, dann nur kleine Poren erhalten werden. Dies kann insbesondere durch eine geschickte Einstellung der Zusammensetzung des glasigen Materials und mithin der glasigen Phase der Beschichtung erzeugt werden. Vorteilhaft kann dies aber auch dadurch erreicht werden, dass der Pigmentanteil der Beschichtung nicht zu groß ist. Denn auf diese Weise ist sichergestellt, dass das glasige Material beim Aufschmelzen (wodurch sich die glasige Phase der Beschichtung ausbildet) die Pigmentpartikel möglichst vollständig umhüllen kann, sodass wenige, insbesondere wenige offene, Poren erhalten werden.

Gemäß einer Ausführungsform weist die glasige Phase, d.h. die glasige Phase der Beschichtung, einen linearen thermischen Ausdehnungskoeffizienten $\alpha_{20-300}$ von wenigstens $5 * 10^{-6}$/K und bevorzugt bis höchstens $11 * 10^{-6}$/K auf. Dies ist vorteilhaft, denn auf diese Weise ist es möglich, dass insgesamt eine noch relativ niedrigdehnende Beschichtung erhalten wird, welche die Festigkeit einer Glaskeramikplatte, die mit einer solchen Beschichtung versehen ist, nicht zu stark mindert. Daher kann insbesondere auch diese Ausführung vorteilhaft mit einer Ausführungsform der Glaskeramikplatte verbunden werden, bei welcher die Beschichtung, wie vorstehend ausgeführt, nur eine sehr geringe Porosität aufweist.

Gemäß einer weiteren Ausführungsform weist die glasige Phase der Beschichtung einen Erweichungspunkt von 500°C bis 800°C, bevorzugt von 500°C bis 750°C, auf.

Hierbei ist allgemein darauf hinzuweisen, dass die glasige Phase sich aus dem glasigen Material oder den glasigen Materialien der Druckfarbe ergibt bzw. von diesen gebildet wird, und zwar in der Regel als homogene Phase. So kann es sein, dass der lineare thermische Ausdehnungskoeffizient der glasigen Materialien, welche von der Druckfarbe umfasst sind, verschieden ist von dem der sich ausbildenden glasigen Phase der Beschichtung.

Sofern jedoch die Druckfarbe lediglich ein glasiges Material umfasst, wird die glasige Phase der Beschichtung dem glasigen Material entsprechen, und der lineare thermische Ausdehnungskoeffizient des glasigen Materials wird - bis auf messtechnische bedingte Ungenauigkeiten - dem linearen thermischen Ausdehnungskoeffizienten dem der glasigen Phase der Beschichtung entsprechen.

Gemäß einer nochmals weiteren Ausführungsform weisen die von der Beschichtung umfassten Pigmentpartikel einen Äquivalentdurchmesser $d_{90}$ von mindestens 0,5 $\mu$m bis höchstens 5 $\mu$m auf. Wie ausgeführt, hat dies den Vorteil, dass die Beschichtung zum einen mittels eines Tintenstrahldrucks aufbringbar ist. Weiterhin sind die Pigmentpartikel so ausgestaltet, dass sie gut und möglichst vollständig während des Einbrandvorgangs, in welchem die glasigen Materialien bzw. das glasige Material der Druckfarbe aufschmilzt und die glasige Phase der Beschichtung bildet, von der glasigen Phase umhüllt werden können. Weiterhin sind auf diese Weise eine gute Verarbeitbarkeit und eine gute Deckkraft der Beschichtung gewährleistet.

Gemäß einer nochmals weiteren Ausführungsform weist die Beschichtung eine Dicke von 1 $\mu$m bis 4 $\mu$m auf, bevorzugt von 1,5 $\mu$m bis 3,5 $\mu$m. Bei einer solchen Dicke ist eine ausreichende Festigkeit der Beschichtung gegenüber mechanischen Angriff gewährleistet, ohne dass die mechanische Festigkeit der Glaskeramikplatte zu stark reduziert würde. Bei einer solchen Schichtdicke kann daher auch gut eine Beschichtung mit nur geringem Porenvolumen, wie vorstehend beschrieben, hergestellt werden.

Insbesondere sind solche Beschichtungen nach Ausführungsformen damit auch geeignet für Glaskeramikplatten umfassend oder aus einer Glaskeramik mit einem niedrigen thermischen Ausdehnungskoeffizienten, wie beispielsweise einer sogenannten LAS-Glaskeramik. Gemäß einer Ausführungsform weist die Glaskeramik der Glaskeramikplatte einen linearen thermischen Ausdehnungskoeffizienten im Bereich von 20°C bis 700°C, , $\alpha_{GK, 20-700}$, von weniger als 3 $* 10^{-6}$/K, bevorzugt von weniger als $2 * 10^{-6}$/K, auf. Solche Glaskeramiken können insbesondere für Glaskeramikplatten eingesetzt werden, welche im Betrieb hohen thermischen Spannungen ausgesetzt sind, beispielsweise als Kochfläche oder als Sichtscheibe für einen Kamin.

Mögliche Dicke für eine Glaskeramikplatte nach der vorliegenden Offenbarung liegen zwischen 1 mm und 10 mm, vorzugsweise zwischen 2 mm und 7 mm und besonders bevorzugt zwischen 3 mm und 5 mm.

Geeignete Pigmente für eine Druckfarbe nach der vorliegenden Offenbarung können insbesondere umfassen oxidische Materialen, beispielsweise spinellbasierte Pigmente, also Pigmente der allgemeinen Formel $AB_2O_4$ mit unterschiedlichen Dotierungen. Geeignete oxid-basierte Pigmente können einen linearen thermischen Ausdehnungskoeffizienten $\alpha$ aufweisen zwischen etwa $6,5 * 10^{-6}$/K und $14 * 10^{-6}$/K.

Beispiele

Einige Beispiele von Zusammensetzungen von Druckfarben nach der vorliegenden Offenbarung finden sich in der folgenden Tabelle. Die angegebenen Bestandteile sind jeweils die Feststoffbestandteile, also ohne Berücksichtigung von weitere, fluiden Bestandteilen wie beispielsweise Lösungsmitteln o.ä.

In der Tabelle sind die angegebenen Prozente jeweils auf den Gesamtfeststoffgehalt der Druckfarbe bezogen, bezogen auf das Gewicht. Bei "$\alpha$" handelt es sich jeweils um den linearen thermischen Ausdehnungskoeffizienten bestimmt im Temperaturbereich von 20°C bis 300°C. Gleichfalls angegeben ist der effektive lineare thermische Ausdehnungskoeffizient $\alpha_{20-300, eff}$, hier abgekürzt als "$\alpha_{eff}$". Die linearen thermischen Ausdehnungskoeffizienten sind jeweils in angegeben in der Einheit $10^{-6}/K$

| **Beispiel** | Fluss | | | Pigment 1 | | | Pigment 2 | | | $\alpha_{eff}$ |
|---|---|---|---|---|---|---|---|---|---|---|
| # | No. | $\alpha$ | % | Art | $\alpha$ | % | Art | $\alpha$ | % | |
| A | 1 | 9,1 | 75 | $TiO_2$ | 8,8 | 25 | | | | 9,03 |
| B | 2 | 9,4 | 85 | $MgAl_2O_4$ | 9 | 15 | | | | 9,34 |
| C | 3 | 8,7 | 71 | $MgMn_2O_4$ | 8,7 | 15 | $Co_3O_4$ | 9,3 | 14 | 8,78 |
| D | 4 | 6,52 | 63 | $CoFe_2O_4$ | 12,1 | 25 | $TiO_2$ | 8,8 | 12 | 8,19 |
| E | 6 | 8,15 | 60 | $Co_3O_4$ | 9,3 | 32 | $TiO_2$ | 8,8 | 8 | 8,57 |
| F | 7 | 7,34 | 78 | $CuCr_2O_4$ | 10,9 | 12 | $Co_3O_4$ | 9,3 | 10 | 7,96 |
| G | 8 | 8,11 | 82 | $MgMn_2O_4$ | 8,7 | 8 | $Co_3O_4$ | 9,3 | 10 | 8,28 |
| H | 9 | 5,37 | 65 | $CuCr_2O_4$ | 10,9 | 15 | $CoFe_2O_4$ | 12,1 | 20 | 7,54 |
| I | 1 | 9,1 | 78 | $Co_3O_4$ | 9,3 | 10 | $TiO_2$ | 8,8 | 12 | 9,08 |
| J | 2 | 9,4 | 85 | $MgMn_2O_4$ | 8,7 | 10 | $TiO_2$ | 8,8 | 5 | 9,30 |
| K | 1 | 9,1 | 92 | $TiO_2$ | 8,8 | 8 | | | | 9,08 |
| L | 3 | 8,7 | 83 | $CoFe_2O_4$ | 12,1 | 12 | $TiO_2$ | 8,8 | 5 | 9,11 |
| M | 3 | 8,7 | 92 | $CuCr_2O_4$ | 10,9 | 8 | | | | 8,88 |
| N | 2 | 9,4 | 73 | $MgAl_2O_4$ | 9 | 15 | $TiO_2$ | 8,8 | 12 | 9,27 |

Die in der vorstehenden Tabelle verwendeten Flüsse finden sich in der nachfolgenden Tabelle. Der lineare thermische Ausdehnungskoeffizient ist hier wiederum bestimmt im Temperaturbereich von 20°C bis 300°C und in Einheiten von $10^{-6}/K$ angegeben. Die Dichte ist in $g/cm^3$ angegeben. $T_g$ steht für die Glasübergangstemperatur, Ew für die Erweichungstemperatur und Va für den Verarbeitungspunkt. Diese Temperaturen sind jeweils in °C angegeben. Die Zusammensetzung der Glasflüsse ist angegeben in Gew.-% auf Oxidbasis.

| Fluss | **1** | **2** | **3** | **4** | **5** | **6** | 7 | **8** | **9** |
|---|---|---|---|---|---|---|---|---|---|
| Dichte | 2,66 | 2,55 | 2,52 | 2,78 | 2,62 | 4,49 | 2,50 | 4,75 | 2,35 |
| $\alpha$ | 9,1 | 9,4 | 8,7 | 6,52 | 7,69 | 8,15 | 7,34 | 8,11 | 5,37 |
| Tg | 470 | 533 | 510 | 535 | 500 | 487 | 491 | 495 | 474 |
| Ew | 575 | 724 | 690 | 726 | 689 | 599 | 686 | 581 | 657 |
| Va | 742 | 1033 | 1000-1030 | 984 | 975 | 830 | 1002 | 889 | 1017 |
| $SiO_2$ | 47,5 | 69,5 | 65,3 | 47 | 51 | 19,9 | 55,4 | 16,1 | 67 |
| $B_2O_3$ | 19 | | 1,4 | 12 | 19,5 | 12,2 | 16,3 | 9,6 | 17,5 |
| $Al_2O_3$ | 2 | | 2,1 | 10 | 3,4 | 0,6 | 7 | 0,5 | 9,5 |
| $Li_2O$ | 4 | | | 2 | 4 | | 2,1 | | 3,7 |
| $Na_2O$ | 7,5 | 8,1 | 9,8 | 2 | 2,4 | 5,3 | 3,7 | 4,3 | 0,3 |

(fortgesetzt)

| Fluss | 1 | 2 | 3 | 4 | 5 | 6 | 7 | 8 | 9 |
|---|---|---|---|---|---|---|---|---|---|
| $K_2O$ | 4 | 8,4 | 6,3 | | 7,6 | 0,14 | 3,8 | 0,17 | 0,9 |
| $MgO$ | | | 0,5 | | | | 0,4 | | 0,1 |
| $CaO$ | 1 | 6,8 | 2,6 | | | | 1 | | 0,3 |
| $SrO$ | | | | | | | 3,3 | | |
| $BaO$ | 2 | 2,1 | | 17 | | | 0,16 | | |
| $ZnO$ | 8,75 | 4,5 | | 10 | 1 | 3,9 | 0,2 | 10,2 | |
| $TiO_2$ | 3,8 | 0,4 | | | 0,1 | 2,6 | | 5,9 | 0,05 |
| $ZrO_2$ | | | | | 10,6 | 3,3 | 3,1 | 2,6 | |
| $CeO_2$ | | | | | | | | | |
| $SnO_2$ | | | | | | 0,12 | | 5,6 | |
| $La_2O_3$ | | | | | | | 0,25 | | |
| $Bi_2O_3$ | | | | | | 50 | | 42 | |
| $As_2O_3$ | | | | | | | | | |
| $Sb_2O_3$ | 0,2 | 0,5 | | | | | | | |
| $Mn_2O_3$ | | | 10,5 | | | | | | |
| $Fe_2O_3$ | | | 2,2 | | | | | | |
| $CoO$ | | | 0,2 | | | | | | |
| $HfO_2$ | | | | | 0,2 | 0,07 | 0,06 | 0,05 | |
| $Nb_2O_3$ | | | | | | | 0,9 | | |

Die keramischen Druckfarben nach der vorliegenden Anmeldung können für eine Reihe von Glaskeramikplatten verwendet werden. Die Zusammensetzung der Glaskeramiken ist dabei nicht besonders beschränkt und es können prinzipiell sowohl volumengefärbte als auch nicht volumengefärbte Glaskeramiken verwendet werden. Auch können die keramischen Druckfarben nach der vorliegenden Anmeldung sowohl als transparente Glaskeramiken als auch auf opake oder transluzente Glaskeramiken aufgebracht werden.

In der folgenden Tabelle sind beispielhafte Zusammensetzungen von bekannten Glaskeramiken des Standes der Technik aufgeführt, welche prinzipiell mit einer keramischen Druckfarbe nach der vorliegenden Offenbarung beschichtet werden können. Derartige geeignete Glaskeramiken sind beispielsweise aus den folgenden Schriften bekannt: WO 2010/040443 A1, EP 3450411 A1, WO 2019/121742 A1, CN 111072276 A1, WO 2010/137000 A1, DE 20 2021 103 464 U1 oder CN 104609733 A1.

| Beispiel | 1 | 2 | 3 | 4 | 5 | 6 | 7 | 8 | 9 | 10 |
|---|---|---|---|---|---|---|---|---|---|---|
| $Li_2O$ | 3,4 | 3,45 | 3,5 | 4,4 | 3,5 | 3,8 | 4,2 | 4,35 | 3,6 | 5,6 |
| $Al_2O_3$ | 18,9 | 20 | 19 | 21,8 | 21,1 | 21,5 | 22,2 | 19,6 | 19,5 | 18,2 |
| $SiO_2$ | 69 | 67,4 | 70,8 | 64,9 | 65,4 | 66,5 | 65,75 | 67,9 | 65,8 | 61 |
| $TiO_2$ | 2,6 | 3,1 | | 2,1 | 2,25 | 2,4 | 2,05 | 2,95 | 4,3 | |
| $ZrO_2$ | 1,7 | 1,3 | 3 | 1,8 | 1,58 | 1,7 | 2,05 | 1,5 | 1 | |
| $SnO_2$ | | | | 0,3 | | 0,3 | 0,2 | | | |
| $As_2O_3$ | 0,6 | 0,8 | 1 | | | | | 0,8 | 1 | |
| $Sb_2O_3$ | | | | | 1 | | | | | |
| $P_2O_5$ | | | | 2 | | | 1,3 | | | 2,4 |

(fortgesetzt)

| Beispiel | 1 | 2 | 3 | 4 | 5 | 6 | 7 | 8 | 9 | 10 |
|---|---|---|---|---|---|---|---|---|---|---|
| $B_2O_3$ | | | | | | | | | 2 | |
| $Na_2O$ | | 0,17 | | 0,4 | 0,8 | 0,5 | 0,5 | 0,1 | 0,3 | |
| $K_2O$ | | 0,19 | | 0,2 | 0,25 | 0,2 | 0,2 | 0,5 | | 4,1 |
| MgO | 1,2 | 1,2 | 1 | 0,4 | | 0,9 | 1,05 | | 1,8 | |
| CaO | | | | 0,5 | | | 0,5 | | | |
| BaO | 0,8 | 0,8 | | 1,2 | 2,35 | 1 | | 0,8 | | |
| ZnO | 1,6 | 1,62 | 1,7 | | 1,3 | 1,5 | | 1,6 | 2,2 | 5,2 |
| $V_2O_5$ | 0,2 | | | | 0,45 | | | | | |
| $WO_3$ | | | | | | | | | | 3,5 |
| * | | | | | 0,29 | | | | | |
| $\alpha_{50-700}$ | | | | | | | | | | 2,96 |
| $\alpha_{20-700}$ | | -0,8 | -0,3 | -0,29 | -0,1 | 0,01 | 0,15 | 0,6 | 2,3 | |
| $\alpha_{25-700}$ | -1 | | | | | | | | | |
| * Summe der folgenden Komponenten: CoO, $Fe_2O_3$, $MnO_2$, NiO. | | | | | | | | | | |

Die Glaskeramiken 1 und 2 sowie 8 bis 10 sind transluzent ausgebildet, die Glaskeramiken 3 bis 7 hingegen transparent.

| Beispiel | 11 | 12 | 13 | 14 | 15 | 16 |
|---|---|---|---|---|---|---|
| $Li_2O$ | 3,74 | 3,22 | 3,71 | 3,8 | 3,8 | 3,73 |
| $Al_2O_3$ | 21,29 | 19,80 | 20,9 | 20,4 | 20,3 | 21,34 |
| $SiO_2$ | 65,21 | 66,90 | 65,14 | 65,4 | 65,3 | 65,16 |
| $TiO_2$ | 3,64 | 2,68 | 3,10 | 3,1 | 3,0 | 3,64 |
| $ZrO_2$ | 0,90 | 0,64 | 1,34 | 1,4 | 1,4 | 0,91 |
| $SnO_2$ | 0,28 | 0,2 | 0,24 | 0,3 | 0,3 | 0,278 |
| $As_2O_3$ | | | | | 0,08 | |
| $Cr_2O_3$ | 0,0035 | | | | 0,025 | 0,003 |
| $P_2O_5$ | 0,052 | | | 0,1 | 0,1 | 0,052 |
| $MnO_2$ | 0,021 | | 0,025 | 0,03 | 0,02 | 0,02 |
| $Na_2O$ | 0,56 | 0,78 | 0,59 | 0,6 | 0,6 | 0,57 |
| $K_2O$ | 0,41 | 0,20 | 0,22 | 0,25 | 0,2 | 0,41 |
| MgO | 0,31 | 0,81 | 0,37 | 0,3 | 0,4 | 0,3 |
| CaO | 0,44 | 0,21 | 0,42 | 0,4 | 0,5 | 0,44 |
| BaO | 1,31 | 2,42 | 2,30 | 2,2 | 2,4 | 1,31 |
| ZnO | 1,58 | 1,16 | 1,50 | 1,5 | 1,4 | 1,59 |
| $V_2O_5$ | 0,0026 | | 0,026 | 0,028 | 0,016 | 0,0015 |
| $MoO_3$ | 0,046 | 0,043 | | 0,17 | | 0,054 |
| $Fe_2O_3$ | 0,089 | 0,110 | 0,085 | 0,09 | 0,14 | 0,092 |
| $\alpha_{50-700}$ | | | | | | |

(fortgesetzt)

| Beispiel | 11 | 12 | 13 | 14 | 15 | 16 |
|---|---|---|---|---|---|---|
| $\alpha_{20-700}$ | 0,14 | | | | | |
| $\alpha_{25-700}$ | | | | | | |

Die Glaskeramiken 11-16 sind transparent, volumengefärbt. Glaskeramik 16 weist einene Lichttransmissionsgrad von 2,8 % bei einer Dicke von 4 mm auf.

Die Glaskeramiken 1 bis 16 können insbesondere als Platte, vorzugsweise mit einer Dicke von 3,5 - 4,5 mm vorliegen. Die Platten können eine polierte oder gewalzte Oberfläche aufweisen. Sie können weiterhin an ihrer Oberfläche eine glasige Zone aufweisen, insbesondere wenn die Oberfläche nicht poliert ist. Auch unpolierte Oberflächen können ohne glasige Zone vorliegen. Die Glaskeramik kann auf einer Seite Noppen zur Erhöhung der Bruchfestigkeit aufweisen, insbesondere auf der der bedruckten Seite gegenüberliegenden Seite.

Ein Beispiel für eine keramische Druckfarbe nach der vorliegenden Offenbarung ist im Folgenden wiedergegeben:

| | |
|---|---|
| Glasfritte 1 | 32,98 Gew.-% |
| Schwarzpigment $CuCr_2O_4$ | 1,05 Gew.-% |
| Weißpigment $TiO_2$ | 0,87 Gew.-% |
| Dipropylenglycolmethylether | 62,71 Gew.-% |
| Additiv 1 | 2,09 Gew.-% |
| Additiv 2 | 0,30 Gew.-% |

Bei Additiv 1 handelt es sich um Poly(oxy-1,2-ethanediyl), a-methyl-w-phosphate. Bei Additiv 2 um polyethermodifiziertes Polymethylsiloxan. Hiermit wird ein resultierender effektiver linearer thermischer Ausdehnungskoeffizient, $\alpha_{20-300, \text{eff}}$, bezogen auf die von der Druckfarbe umfassten Glaspartikel und Pigmentpartikel, von $9{,}15 * 10^{-6}$/K erzielt.

Die keramische Druckfarbe wurde verwendet, um mittels eines Tintenstrahldruckverfahrens eine Beschichtung auf eine bereits keramisierte Glaskeramik aufzubringen. Dazu wurde eine beidseitig glatte Platte aus Glaskeramik des Typs 11 mit einer Dicke von 4 mm und einer Größe von 50 x 50 $cm^2$ bedruckt und anschließend eingebrannt. Der Gewichtsanteil der Pigmentpartikel an der Beschichtung betrug 5,5 %. Die Porosität lag bei weniger als 5 Vol.-%.

Vorteilhaft kann die von der Glaskeramik umfasste Glaskeramikplatte einen linearen thermischen Ausdehnungskoeffizienten im Bereich von 20°C bis 700°C, $\alpha_{GK, 20-700}$, von -0,5 bis $2 * 10^{-6}$/K, bevorzugt von 0 bis $1 * 10^{-6}$/K, besonders bevorzugt von 0,1 bis $0{,}5 * 10^{-6}$/K aufweisen.

### Beschreibung der Zeichnung

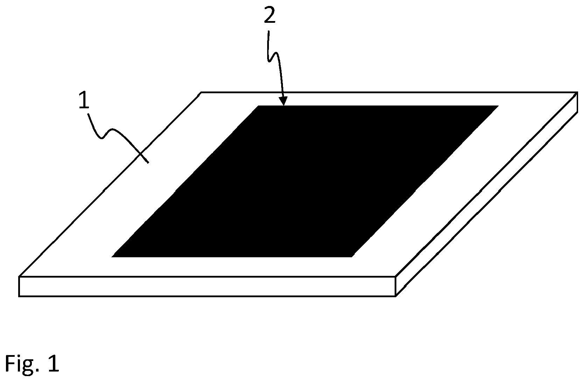

Fig. 1 zeigt schematisch und nicht maßstabgetreu eine Darstellung einer Glaskeramikplatte 1 nach Ausführungsformen umfassend eine Beschichtung 2. Die Beschichtung 2 kann insbesondere mit einer keramischen Druckfarbe nach Ausführungsformen der vorliegenden Offenbarung erhalten werden.

Bezugszeichenliste

1     Glaskeramikplatte

2     Beschichtung

**Patentansprüche**

**1.** Keramische Druckfarbe, insbesondere für den Auftrag mittels eines Tintenstrahldruckverfahrens, insbesondere vorzugsweise zur Herstellung einer Beschichtung auf einer Glaskeramik,

umfassend wenigstens ein glasiges Material umfassend Glaspartikel und wenigstens ein Pigment umfassend Pigmentpartikel,

wobei das Verhältnis der Summe des Gewichts der von der Druckfarbe umfassten Glaspartikel zu der Summe der von der Druckfarbe umfassten Pigmentpartikel zwischen mindestens 1,5 und weniger als 19 liegt, wobei die Glaspartikel einen Äquivalentdurchmesser $d_{90}$ aufweisen, welcher im Bereich von mindestens 0,5 $\mu$m bis höchstens 5 $\mu$m liegt, bevorzugt einen Äquivalentdurchmesser $d_{97}$ im Bereich von mindestens 0,5 $\mu$m bis höchstens 5 $\mu$m, besonders bevorzugt einen Äquivalentdurchmesser $d_{97}$ im Bereich von mindestens 0,5 $\mu$m bis höchstens 2,5 $\mu$m,

wobei der resultierende effektive lineare thermische Ausdehnungskoeffizient, $\alpha_{20\text{-}300,\,eff}$, bezogen auf die von der Druckfarbe umfassten Glaspartikel und Pigmentpartikel, im Bereich von $6{,}5 * 10^{-6}/K$ bis $11 * 10^{-6}/K$ liegt,

wobei vorzugsweise der effektive lineare thermische Ausdehnungskoeffizient $\alpha_{20\text{-}300,\,eff}$ sich nach der folgenden Formel ergibt:

$\alpha_{20\text{-}300,\,eff}$ = $\Sigma$ (Gewichtsanteil glasiges Material i * $\alpha_{20\text{-}300,glasiges\ Material\ i}$) + $\Sigma$ (Gewichtsanteil Pigment z * $\alpha_{20\text{-}300,Pigment\ z}$), wobei der Gewichtsanteil jeweils bezogen ist auf das Gesamtgewicht der Druckfarbe an Feststoffen, also umfassend alle glasigen Materialien und Pigmente.

2. Druckfarbe nach Anspruch 1, wobei die Glaspartikel ein Glas mit einem linearen thermischen Ausdehnungskoeffizienten $\alpha_{20\text{-}300}$ von wenigstens $5 * 10^{-6}/K$ und maximal $11 * 10^{-6}/K$ umfassen.

3. Druckfarbe nach einem der Ansprüche 1 oder 2, wobei die Druckfarbe bei einer Temperatur von 830°C oder weniger, bevorzugt 750°C oder weniger, und vorzugsweise mindestens 500°C einbrennbar ist.

4. Druckfarbe nach einem der Ansprüche 1 bis 3, wobei die von der Druckfarbe umfassten Pigmentpartikel einen Äquivalentdurchmesser $d_{90}$ von mindestens 0,5 $\mu$m bis höchstens 5 $\mu$m aufweisen.

5. Druckfarbe nach einem der Ansprüche 1 bis 4, wobei die Glaspartikel einen Erweichungspunkt von 500°C bis 800°C, bevorzugt 500°C bis 750°C aufweisen.

6. Druckfarbe nach einem der Ansprüche 1 bis 5, wobei die Glaspartikel ein Glas umfassend wenigstens 15 Gew.-% $SiO_2$ und höchstens 72 Gew.-% $SiO_2$ umfassen oder aus einem solchen Glas bestehen.

7. Druckfarbe nach einem der Ansprüche 1 bis 6, wobei die Glaspartikel ein Glas umfassend $Na_2O$ umfassen oder aus einem solchen Glas bestehen, wobei der Anteil von $Na_2O$ bevorzugt mindestens 0,5 Gew.-% beträgt und besonders bevorzugt höchstens 11 Gew.-%.

8. Glaskeramikplatte (1) umfassend wenigstens eine Beschichtung (2), vorzugsweise eine Beschichtung hergestellt oder herstellbar mittels einer Druckfarbe nach einem der Ansprüche 1 bis 7,

wobei die Beschichtung (2) eine glasige Phase und Pigmentpartikel umfasst,
wobei der Gewichtsanteil der Pigmentpartikel an der Beschichtung (2) zwischen mindestens 5 Gew.-% und weniger als 40 Gew.-% beträgt,
wobei die Pigmentpartikel in der glasigen Phase dispergiert vorliegen,
wobei die Beschichtung (2) bevorzugt weniger als 5 Vol.-% Porosität aufweist, besonders bevorzugt weniger als 1 Vol.-%, ganz besonders bevorzugt weniger als 0,5 Vol.-% und am meisten bevorzugt weniger als 0,1 Vol.-%,
wobei die Beschichtung (2) einen resultierenden effektiven linearen thermischen Ausdehnungskoeffizienten, $\alpha_{20\text{-}300,\,eff}$, im Bereich von $6{,}5 * 10^{-6}/K$ bis $11 * 10^{-6}/K$ aufweist,
wobei vorzugsweise der effektive lineare thermische Ausdehnungskoeffizient $\alpha_{20\text{-}300,\,eff}$ sich nach der folgenden Formel ergibt:

$$\alpha_{20\text{-}300,\,eff} = \sum (\text{Gewichtsanteil glasiges Material i} * \alpha_{20\text{-}300,glasiges\ Material\ i}) + \sum (\text{Gewichtsanteil Pigment z} * \alpha_{20\text{-}300,Pigment\ z}).$$

9. Glaskeramikplatte (1) nach Anspruch 8, wobei die glasige Phase der Beschichtung (2) einen linearen thermischen Ausdehnungskoeffizienten $\alpha_{20\text{-}300}$ von wenigstens $5*10^{-6}/K$ und bevorzugt bis höchstens $11 * 10^{-6}/K$ aufweist.

10. Glaskeramikplatte (1) nach einem der Ansprüche 8 oder 9, wobei die glasige Phase der Beschichtung (2) einen Erweichungspunkt von 500°C bis 800°C, bevorzugt 500°C bis 750°C aufweist.

11. Glaskeramikplatte (1) nach einem der Ansprüche 8 bis 10, wobei die von der Beschichtung (2) umfassten Pigment-partikel einen Äquivalentdurchmesser $d_{90}$ von mindestens 0,5 µm bis höchstens 5 µm aufweisen.

12. Glaskeramikplatte (1) nach einem der Ansprüche 8 bis 11, wobei die Beschichtung (2) eine Dicke von 1 µm bis 4 µm, bevorzugt 1,5 µm bis 3,5 µm aufweist.

13. Glaskeramikplatte (2) nach einem der Ansprüche 8 bis 12, wobei die Glaskeramik einen linearen thermischen Ausdehnungskoeffizienten im Bereich von 20°C bis 700°C, $\alpha_{GK, 20-700}$, von -0,5 bis 2 $*10^{-6}$/K, bevorzugt von 0 bis 1 * $10^{-6}$/K, besonders bevorzugt von 0,1 bis 0,5 $*10^{-6}$/Kaufweist.

14. Verwendung einer Glaskeramikplatte (1) nach einem der vorhergehenden Ansprüche 8 bis 13 in einem Kochgerät, Backofen, Küchenmöbel, Spritzschutzplatte für Küchen, Kamin für Innenräume, insbesondere als Innen- oder Außenverkleidung oder als Sichtfenster, Kamin für den Außenbereich, insbesondere als Innen- oder Außenverkleidung oder als Sichtfenster, Grill, Kühlschrank, Mikrowellengerät, Abdeckung oder Verblendung von Dunstabzugshauben, Mobiltelefon, Tablet, Automobil, Laborgerät, Labormöbel, Brandschutzverglasung, Sichtfenster für Hochtemperaturprozesskammern, in einer IR-Strahlerabdeckung, Sichtblende, Abdeckung einer Benutzerschnittstelle in einem Bedienfeld vorzugsweise für die Steuerung wenigstens eines Haushaltsgeräts oder Abdeckung für eine Induktions-ladestation

Fig. 1

## EUROPÄISCHER RECHERCHENBERICHT

Nummer der Anmeldung

EP 22 19 4368

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 127624 A1 (SCHOTT AG [DE]) 23. Mai 2019 (2019-05-23) * Beispiele; Absätze [0094], [0099]; Ansprüche 1,4,11,18,19 * ----- | 1-14 | INV. C09D11/037 C03C17/00 C09D11/322 C09D11/38 H05B6/12 |
| X | EP 2 918 560 A1 (TORRECID SA [ES]) 16. September 2015 (2015-09-16) * Ansprüche; Beispiele; Absätze [0001], [0025] * ----- | 1-14 | |
| X | EP 3 845 614 A1 (TECGLASS SL [ES]) 7. Juli 2021 (2021-07-07) * Ansprüche 1-4 * ----- | 1-7 | |
| X | WO 2016/008848 A1 (SCHOTT AG [DE]) 21. Januar 2016 (2016-01-21) * das ganze Dokument * ----- | 1-14 | |
| X | WO 2020/099704 A1 (TORRECID SA [ES]) 22. Mai 2020 (2020-05-22) * Beispiele; Ansprüche 1, 2 * * Seite 7, Zeile 34 – Seite 8, Zeile 4 * * Seite 2, Zeile 15 – Zeile 20 * ----- | 1-14 | RECHERCHIERTE SACHGEBIETE (IPC) C09D H05B C03C |

Der vorliegende Recherchenbericht wurde für alle Patentansprüche erstellt

| Recherchenort | Abschlußdatum der Recherche | Prüfer |
|---|---|---|
| München | 21. Februar 2023 | Haider, Ursula |

**ANHANG ZUM EUROPÄISCHEN RECHERCHENBERICHT
ÜBER DIE EUROPÄISCHE PATENTANMELDUNG NR.**

EP 22 19 4368

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2023

| Im Recherchenbericht angeführtes Patentdokument | Datum der Veröffentlichung | Mitglied(er) der Patentfamilie | Datum der Veröffentlichung |
|---|---|---|---|
| DE 102017127624 A1 | 23-05-2019 | BR 112020010277 A2 | 13-10-2020 |
| | | BR 112020010342 A2 | 10-11-2020 |
| | | CN 111587231 A | 25-08-2020 |
| | | CN 111670171 A | 15-09-2020 |
| | | DE 102017127624 A1 | 23-05-2019 |
| | | EP 3713888 A1 | 30-09-2020 |
| | | EP 3713889 A1 | 30-09-2020 |
| | | US 2020283333 A1 | 10-09-2020 |
| | | US 2020354264 A1 | 12-11-2020 |
| | | US 2023035460 A1 | 02-02-2023 |
| | | WO 2019101873 A1 | 31-05-2019 |
| | | WO 2019101878 A1 | 31-05-2019 |
| | | WO 2019101880 A1 | 31-05-2019 |
| EP 2918560 A1 | 16-09-2015 | EP 2918560 A1 | 16-09-2015 |
| | | ES 2468553 A1 | 16-06-2014 |
| | | US 2015291841 A1 | 15-10-2015 |
| | | WO 2014072553 A1 | 15-05-2014 |
| EP 3845614 A1 | 07-07-2021 | EP 3845614 A1 | 07-07-2021 |
| | | ES 2745546 A1 | 02-03-2020 |
| | | US 2021395543 A1 | 23-12-2021 |
| | | WO 2020043929 A1 | 05-03-2020 |
| WO 2016008848 A1 | 21-01-2016 | DE 102014010335 A1 | 14-01-2016 |
| | | DE 202015006002 U1 | 22-09-2015 |
| | | EP 3169735 A1 | 24-05-2017 |
| | | ES 2676757 T3 | 24-07-2018 |
| | | WO 2016008848 A1 | 21-01-2016 |
| WO 2020099704 A1 | 22-05-2020 | ES 2759973 A1 | 12-05-2020 |
| | | WO 2020099704 A1 | 22-05-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160244356 A1
- US 20120263957 A1
- US 20070031603 A
- US 20200283333 A1
- US 20160340232 A1
- WO 2016008848 A1
- US 20080139375 A1
- US 20070191206 A1
- US 20080214379 A1
- US 6525300 B1
- EP 0978493 B1
- US 6043171 A
- DE 4201286 C2
- DE 19512847 C1
- US 6187429 B1
- US 5747395 A
- US 20210115281 A1
- US 20100273631 A1
- WO 2016110724 A

- WO 2020043929 A1
- US 20090214840 A1
- WO 2015003736 A1
- US 20160264455 A1
- US 20130273320 A1
- US 20060189470 A1
- EP 3372569 B1
- EP 1870383 B1
- DE 102016216442 B4
- DE 102005040588 B9
- DE 102004002766 B4
- WO 2010040443 A1
- EP 3450411 A1
- WO 2019121742 A1
- CN 111072276 A1
- WO 2010137000 A1
- DE 202021103464 U1
- CN 104609733 A1